# FASCICULE DE BREVET EUROPEEN

(11) **EP 0 575 212 B1**
(45) Date de publication et mention de la délivrance du brevet: **15.07.1998**
(21) Numéro de dépôt: 93401374.9
(22) Date de dépôt: 28.05.1993
(51) Int. Cl.: G06M 1/02, G01D 11/26

(54) **Dispositif pour éliminer la buée formée sur la face intérieure d'une vitre de totalisateur**
Vorrichtung zur Beseitigung von auf der Schauglasinnenseite eines Totalisators geformtem Beschlag
Device to eliminate condensation from the inside of the window of a totalizer

(30) Priorité: 10.06.1992 FR 9207170
(43) Date de publication de la demande: 22.12.1993
(73) Titulaire: SCHLUMBERGER INDUSTRIES, F-92120 Montrouge (FR)
(72) Inventeur: Hamon, Serge, F-71000 Macon (FR)
(74) Mandataire: Dupont, Henri

(56) Documents cités:
- DE-A- 3 439 958
- US-A- 2 697 242

## Description

La présente invention a pour objet un dispositif pour éliminer la buée formée sur la face intérieure d'une vitre de totalisateur, notamment pour compteur d'eau.

On sait qu'il existe plusieurs types de totalisateur pour compteur d'eau: les totalisateurs humides dont le mécanisme ainsi que les rouleaux d'affichage baignent complètement dans le liquide, et les totalisateurs secs ou extra secs pour lesquels les rouleaux d'affichage sont placés dans une chambre étanche. La présente invention ne s'applique dans le domaine des compteurs d'eau qu'aux totalisateurs secs ou extra secs.

Pour ces totalisateurs, la lecture des rouleaux d'affichage s'effectue à travers une vitre transparente. Il arrive que l'étancheïté de la chambre sèche ne soit pas parfaite et que de la buée se forme sur la face intérieure de la vitre gênant ou même interdisant toute lecture de l'affichage des rouleaux.

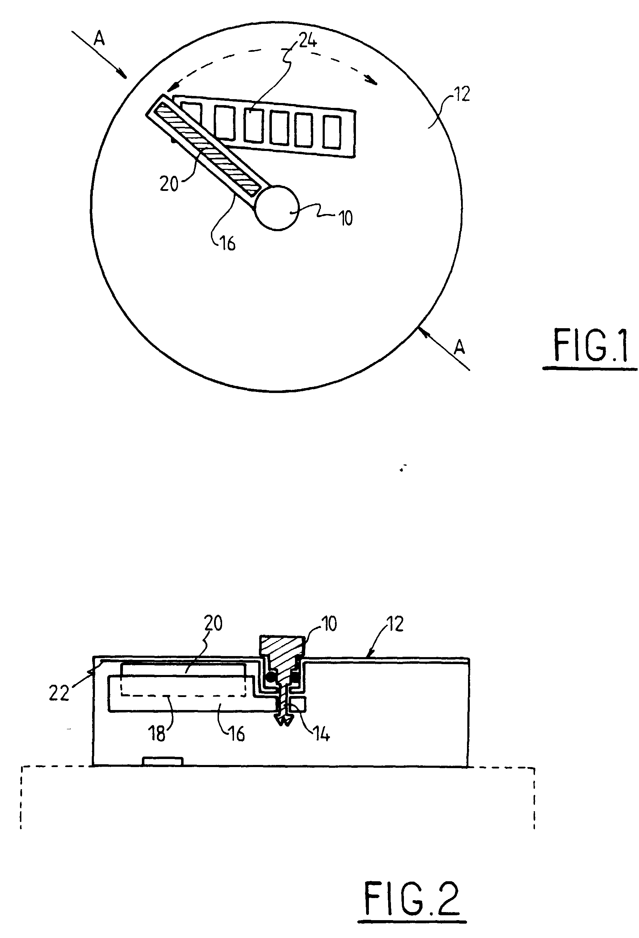

On connait un dispositif utilisé pour éliminer la buée sur la face intérieure d'une vitre d'un totalisateur sec ou exta sec. Un tel dispositif est décrit en référence aux figures 1 et 2.

La figure 1 représente schématiquement une vue de dessus d'un totalisateur de l'art. antérieur et la figure 2 représente une coupe selon l'axe AA de ce totalisateur. Le dispositif essuie-glace comporte un bouton de commande 10 manipulable de l'extérieur du totalisateur et traversant de manière étanche la vitre 12 du totalisateur. Le bouton 10 se prolonge par un axe 14 qui supporte un balai 16 s'étendant perpendiculairement à l'axe.
Le balai 16 comporte un évidement 18 longitudinal sur la partie supérieure du balai 16. Une pièce 20 en feutrine ou en caoutchouc est fixée dans cet évidement 18 de manière à venir frotter contre la face intérieure 22 de la vitre du totalisateur.

Lorsque de la buée est déposée sur la face interne 22 de la vitre, empêchant toute lecture des rouleaux 24 indiquant la mesure effectuée par le totalisateur, l'utilisateur actionne le bouton de commande 10. Lors du déplacement en rotation du balai, le frottement de la pièce 20 en feutrine élimine la buée sur la face intérieure 22 de la vitre, au dessus des rouleaux 24.
Ce type d'essuie-glace présente des inconvénients. Du point de vue de la fabrication du dispositif, la pièce en feutrine 20 doit être incorporée dans l'espace 18 prévu à cet effet. Cette opération délicate alourdit le processus de fabrication.

De plus, le balai et la pièce en feutrine ou en caoutchouc ne sont pas transparents; par conséquent, il arrive que cet ensemble masque les rouleaux du totalisateur et en gêne la lecture.

La présente invention pallie ces inconvenients. Elle concerne un dispositif pour éliminer la buée sur la face intérieure d'une vitre de totalisateur comprenant un patin mobile muni d'une gouttière appliquée sur la face intérieure de la vitre et apte à éliminer la buée par capillarité. Le mécanisme de ce dispositif est facile à monter. D'autre part, toute gêne de lecture est écartée grâce notamment à une position au repos du dispositif en dehors du champ de lecture des rouleaux et aussi par la possibilité d'utiliser des composants transparents.

De manière avantageuse, le patin est circulaire et la gouttière est disposée sur une circonférence du patin.

Selon un mode de réalisation particulière, la face intérieure de la vitre comprend une glissière de guidage apte à recevoir le patin et munie de bords d'arrêt à ses extrémités de manière à empêcher le patin de sortir de la glissière.

De manière avantageuse, la glissière de guidage possède une forme en L, le pied du L formant un espace de dégagement pour le patin.

De manière préférée, le dispositif comprend:
- Une biellette appliquant le patin sur la face intérieure de la vitre, le patin étant monté mobile sur la biellette et
- Un bouton de commande apte à être mis en rotation et monté de manière étanche sur la vitre, la biellette étant solidaire à une de ses extrémités dudit bouton.

Avantageusement, la biellette et le patin sont en matériau transparent.

Les caractéristiques et avantages de l'invention ressortiront mieux de la description qui suit, donnée à titre explicatif et non limitatif en référence aux dessins annexés dans lesquels:
La figure 1 déjà décrite représente schématiquement une vue de dessus d'un totalisateur muni d'un système pour éliminer la buée selon l'art. antérieur;
La figure 2 déjà décrite représente schématiquement une vue en coupe du dispositif de la figure précédente;
La figure 3 représente schématiquement une vue de dessus d'un dispossitif conforme à l'invention;
La figure 4 représente schématiquement une vue en coupe de ce dispositif.

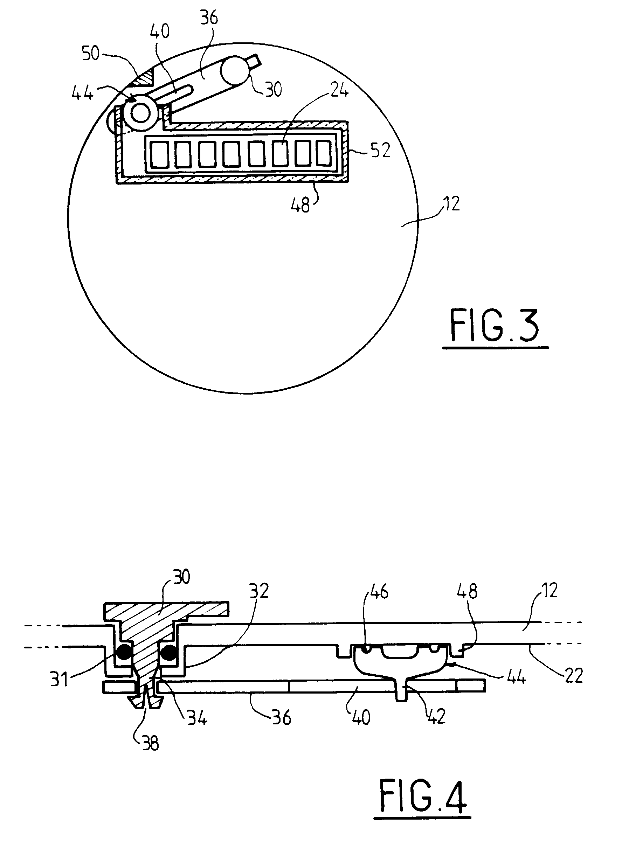

En référence aux figures 3 et 4, on décrit maintenant un dispositif conforme à l'invention.
Ce dernier comprend un bouton de commande 30 monté de manière étanche dans un logement 32 aménagé dans la vitre 12 du totalisateur. L'étanchéïté est assurée par un joint torique 31 placé à l'intérieur du logement 32 et entourant le corps du bouton de commande 30. Le bouton 30 est manipulable en rotation de l'extérieur du totalisateur. Il possède un axe 34 qui pénètre à l'intérieur du totalisateur par le fond du logement 32.
L'axe 34 traverse une biellette 36 par une perforation pratiquée à cet effet. La biellette 36 est solidarisée à l'axe 34 grâce à un système 38 à encliquetage pratiqué à l'extrémité de l'axe 34.
La biellette 36 s'étend perpendiculairement à l'axe 34 et donc parallèlement au plan de la vitre 12. La biellette 36 possède une ouverture longitudinale 40 dans laquelle pénètre un axe 42 fixé sur une face d'un patin 44 circulaire. Le patin 42 peut donc coulisser librement le long de l'ouverture 40 lorsque la biellette 36 est actionnée.
La biellette 36 est positionnée à une distance de la face intérieure 22 de la vitre 12 telle que la face supérieure du patin 44 soit en contact avec ladite face intérieure 22 de la vitre. Ce contact est tel qu'il n'engendre pas de frottement important entre la face supérieure du patin 44 et la face intérieure 22 de la vitre 12 lorsque le patin 44 est en mouvement.
La face supérieure du patin 44 comporte, sur une circonférence, une gouttière 46 apte à éliminer par capillarité toute buée éventuellement déposée sur la face intérieure 22 de la vitre 12.
La face intérieure 22 de la vitre 12 est munie de bords de guidage 48 formant glissière. La glissière possède un écartement entre ses bords apte à la réception et au guidage du patin 44 présente avantageusement une forme en L. Le corps du L est positionné en regard des rouleaux d'affichage 24 du totalisateur. Le pied du L forme un espace de dégagement pour le patin 44, permettant de positionner celui-ci hors du champ de lecture des rouleaux 24. La face intérieure 22 de la vitre 12 est encore munie de bords d'arrêt 50, 52 positionnés de manière à empêcher le patin 44 de sortir de la glissière 48 et donc de manière à limiter l'amplitude de son mouvement.

Lorsqu'un utilisateur désire lire l'affichage des rouleaux et que la face intérieure 22 de la vitre 12 du totalisateur est recouverte de buée, il imprime un mouvement de rotation au bouton de commande 30. La biellette 36 entre alors en rotation, entraînant le patin 44 dans un mouvement de translation guidé par la glissière 48. Lors du mouvement de translation, la buée est aspirée par la gouttière 46.
Un mouvement d'aller et retour permet de positionner le patin 44 dans son espace de dégagement et d'éviter toute gêne pour la lecture. De plus, la biellette 36 ainsi que le patin 44 sont réalisés en matériau transparent, par exemple du polycarbonate, du polystyrène, ou du polyméthacrylate de méthyle (PMMA).
De cette manière, la lecture de l'affichage des rouleaux est possible quelque soit la position du patin 44 dans la glissière.

## Revendications

1. Dispositif pour éliminer la buée formée sur la face intérieure (22) d'une vitre (12) de totalisateur caractérisé en ce qu'il comprend un patin mobile (44) muni d'une gouttière (46) appliquée sur la face intérieure (22) de la vitre (12) et apte à éliminer la buée par capillarité.

2. Dispositif selon la revendication 1 caractérisé en ce que le patin (44) est circulaire et en ce que la gouttière (46) est disposée sur une circonférence du patin (44).

3. Dispositif selon la revendication 1 caractérisé en ce que la face intérieure (22) de la vitre (12) comprend une glissière de guidage (48) apte à recevoir le patin (44) et munie de bords d'arrêt (50, 52) à ses extrêmités de manière à empêcher le patin (44) de sortir de la glissière.

4. Dispositif selon la revendication 3 caractérisé en ce que ladite glissière de guidage (48) possède un espace de dégagement pour le patin (44).

5. Dispositif selon la revendication 4 caractérisé en ce que ladite glissière de guidage (48) possède une forme en L, le pied du L formant ledit espace de dégagement.

6. Dispositif selon la revendication 1 caractérisé en ce qu'il comprend:
une biellette (36) appliquant le patin (44) sur la face intérieure (22) de la vitre (12), le patin étant monté mobile sur la biellette (36), et
un bouton de commande (30) apte à être mis en rotation, et monté de manière étanche sur la vitre (12), la biellette (36) étant solidaire, à une de ses extrémités, dudit bouton (30).

7. Dispositif selon la revendication 6 caractérisé en ce que la biellette (36) et le patin (44) sont en matériau transparent.

## Patentansprüche

1. Vorrichtung zur Beseitigung von auf der Innenseite (22) einer Scheibe (12) eines Zählwerks gebildeten Beschlag, dadurch gekennzeichnet, daß sie ein bewegliches Gleitstück (44) enthält, das mit einer Rinne (46) versehen ist, die gegen die Innenseite (22) der Scheibe gedrückt wird und in der Lage ist, den Beschlag durch Kapillarität zu beseitigen.

2. Vorrichtung nach Anspruch 1, dadurch gekennzeichnet, daß das Gleitstück (44) kreisförmig ist und daß die Rinne (46) an einem Umfang des Gleitstücks (44)angeordnet ist.

3. Vorrichtung nach Anspruch 1, dadurch gekennzeichnet, daß die Innenseite (22) der Scheibe (12) eine Schiebeführung (48) enthält, die das Gleitstück (44) aufnehmen kann, und an ihren Enden mit Anschlagrändern (50, 52) versehen ist, um das Austreten des Gleitstücks (44) aus der Schiebeführung zu vermeiden.

4. Vorrichtung nach Anspruch 3, dadurch gekennzeichnet, daß die Schiebeführung (48) eine Austrittsaussparung für das Gleitstück (44) enthält.

5. Vorrichtung nach Anspruch 4, dadurch gekennzeichnet, daß die Schiebeführung (48) eine L-Form aufweist, wobei der Fuß des L die Austrittsaussparung bildet.

6. Vorrichtung nach Anspruch 1, dadurch gekennzeichnet, daß sie enthält:
einen Schwingarm (6), der das Gleitstück (44) an die Innenseite (22) der Scheibe (12) andrückt, wobei das Gleitstück beweglich an dem Schwingarm (36) angebracht ist, und
einen Steuerknopf (30), der gedreht werden kann und in dichter Weise an der Scheibe angebracht ist, wobei der Schwingarm (36) an einem seiner Enden mit dem Knopf (30) fest verbunden ist.

7. Vorrichtung nach Anspruch 6, dadurch gekennzeichnet, daß der Schwingarm (36) und das Gleitstück (44) aus einem durchsichtigen Material bestehen.

## Claims

1. A device for removing condensation from the inside surface (22) of a flowmeter window (12), characterized in that it includes a movable skid (44) provided with a gutter (46) which bears against the inside surface (22) of the window (12) and which removes the condensation by capillary action.

2. A device according to claim 1, characterized in that the skid (44) is circular and the gutter (46) is provided around the circumference of the skid (44).

3. A device according to claim 1, characterized in that the inside surface (22) of the window (12) comprises a guide slideway (48) which receives the skid (44) and which has stops (50, 52) at its ends so as to prevent the skid (44) from coming out of the slideway.

4. A device according to claim 3, characterized in that said guide slideway (48) has a space for disengagement of the skid (44).

5. A device according to claim 4, characterized in that said guide slideway (48) is L-shaped, the foot of the L forming said disengagement space.

6. A device according to claim 1, characterized in that it includes a link (36) which urges the skid (44) against the inside surface (22) of the window (12), the skid being moveably mounted on the link (36), and a control knob (30) which is sealingly mounted on the window (12) and which can be rotated, one end of the link (36) being secured to said knob (30).

7. A device according to claim 6, characterized in that the link (36) and the skid (44) are transparent.
